# EUROPEAN PATENT APPLICATION

(11) **EP 4 205 848 A1**
(43) Date of publication of application: **05.07.2023**
(21) Application number: 21869153.3
(22) Date of filing: 30.08.2021
(51) Int. Cl.: B01J 35/04, B01D 53/94, B01J 23/63, F01N 3/10, F01N 3/28

(54) **EXHAUST GAS PURIFICATION CATALYST**

(30) Priority: 18.09.2020 JP 2020156857
(71) Applicant: CATALER CORPORATION, Kakegawa-shi, Shizuoka 437-1492 (JP)
(72) Inventor: MIURA, Taku, Kakegawa-shi, Shizuoka 437-1492 (JP); GOTO, Takashi, Kakegawa-shi, Shizuoka 437-1492 (JP); TAKI, Kenichi, Kakegawa-shi, Shizuoka 437-1492 (JP); SAKAGAMI, Shingo, Kakegawa-shi, Shizuoka 437-1492 (JP)
(74) Representative: Kramer Barske Schmidtchen Patentanwälte PartG mbB
(86) International application number: PCT/JP2021/031650
(87) International publication number: WO 2022/059466

(57) **Abstract**

According to the present invention, an exhaust gas purification catalyst that has both a warming performance and a high load performance is provided. By the present invention, provided is the exhaust gas purification catalyst including a base material and a catalyst coated layer. The catalyst coated layer includes a former stage part and a latter stage part. An alumina content X1 in the former stage part per volume of the base material is not more than an alumina content X2 in the latter stage part per volume of the base material. A ratio (Y2/Y1) of a coating amount Y2 in the latter stage part per volume of the base material to a coating amount Y1 in the former stage part per volume of the base material satisfies 1.0 < (Y2/Y1) ≤ 2.0.

## Description

### [Technical Field]

The present invention relates to an exhaust gas purification catalyst. More specifically, the present invention relates to an exhaust gas purification catalyst that is disposed in an exhaust path of an internal-combustion engine and purifies the exhaust gas emitted from the internal-combustion engine. The present application claims priority based on Japanese Patent Application No. 2020-156857 filed on September 18, 2020, the entire contents of which are incorporated herein by reference.

### [Background Art]

The exhaust gas emitted from an internal-combustion engine of a vehicle or the like includes harmful components such as nitrogen oxide (NOx), hydrocarbon (HC), and carbon monoxide (CO). Among the harmful components, NOx has a negative influence on human bodies and also causes acid rain, and for these reasons, the emission regulation of NOx in particular has become stricter. For efficient reaction and removal of these harmful components from the exhaust gas, exhaust gas purification catalysts have been used conventionally. One typical structure of the exhaust gas purification catalysts is a structure in which a catalyst coated layer containing precious metal such as Pt (platinum), Pd (palladium), or Rh (rhodium) and a carrier such as aluminum is formed on a base material with high heat resistance, such as ceramic. Patent Literatures 1 to 5 are cited as the conventional technical literatures related to the exhaust gas purification catalysts.

One of the performances the exhaust gas purification catalysts are required to have is the performance of exerting the favorable purifying performance (warming performance) by quick activation even in a low temperature state, for example immediately after the start of an engine. In regard to this, for example, Patent Literature 1 discloses an exhaust gas purification catalyst including a base material, an upstream side catalyst coated layer formed on an exhaust gas upstream side of the base material, and a downstream side catalyst coated layer formed on an exhaust gas downstream side of the base material. Patent Literature 1 describes that the low-temperature oxidation activity of the upstream side catalyst coated layer can be improved by making the heat capacity of the downstream side catalyst coated layer higher than the heat capacity of the upstream side catalyst coated layer and forming a high carrying portion with a higher precious metal carrying concentration in an upstream side part of the upstream side catalyst coated layer than in the other part of the upstream side catalyst coated layer.

### [Citation List]

### [Patent Literatures]

[Patent Literature 1] Japanese Patent Application Publication No. 2009-285605
[Patent Literature 2] Japanese Patent Application Publication No. 2007-038072
[Patent Literature 3] Japanese Patent Application Publication No. 2017-100073
[Patent Literature 4] Japanese Patent Application Publication No. 2017-104825
[Patent Literature 5] Japanese Patent Application Publication No. 2016-185531

### [Summary of Invention]

Incidentally, in recent years, more vehicles have come to be equipped with smaller displacement engines due to the downsizing of the internal-combustion engine and the increase in demand for light vehicles. Such a vehicle typically has just one exhaust gas purification catalyst. Therefore, one exhaust gas purification catalyst is required to satisfy a high load performance in addition to the warming performance. For example, even in the environment with the high load in which the vehicle suddenly accelerates to overtake or merge on a highway, for instance, so that the engine displacement increases, it is required to purify the harmful components in the exhaust gas properly.

The present invention has been made in view of the circumstances, and it is an object of the present invention to provide an exhaust gas purification catalyst that has both a warming performance and a high load performance.

According to the present invention, an exhaust gas purification catalyst that is disposed in an exhaust path of an internal-combustion engine and purifies exhaust gas emitted from the internal-combustion engine is provided. This exhaust gas purification catalyst includes a base material, and a catalyst coated layer formed on the base material and containing a precious metal catalyst and alumina. The catalyst coated layer includes a former stage part existing on an upstream side and a latter stage part existing on a downstream side relative to the former stage part in a flowing direction of the exhaust gas. An alumina content X1 (g/L) in the former stage part per volume of the base material is not more than an alumina content X2 (g/L) in the latter stage part per volume of the base material. A ratio (Y2/Y1) of a coating amount Y2 (g/L) in the latter stage part per volume of the base material to a coating amount Y1 (g/L) in the former stage part per volume of the base material satisfies 1.0 < (Y2/Y1) ≤ 2.0.

By allowing the alumina content in the former stage part to be not more than that in the latter stage part and allowing the ratio of the coating amount (Y2/Y1) to be regulated within the aforementioned range as appropriate, both a warming performance and a high load performance can be achieved. That is to say, the former stage part becomes warm easily and the excellent warming performance can be achieved. Additionally, by increasing the heat capacity of the latter stage part, harmful components in the exhaust gas (especially, NOx) can be purified favorably even when the engine displacement becomes larger and thus, the excellent high load performance can be achieved.

In a preferred aspect, a ratio (X2/X1) of the alumina content X2 to the alumina content X1 satisfies 1.0 ≤ (X2/X1) ≤ 2.0. According to this, the ratio of alumina is suitably balanced in the former stage part and in the latter stage part, and the exhaust gas purification catalyst can have both the warming performance and the high load performance at the higher level.

In a preferred aspect, the alumina content X1 is 20 g/L or more and 50 g/L or less. Thus, the heat resistance of the former stage part can be increased and the warming performance can be improved further, and accordingly, the warming performance and the high load performance can be made balanced at the higher level.

In a preferred aspect, the coating amount Y2 is 100 g/L or more and 160 g/L or less. Thus, the heat resistance of the latter stage part can be increased and the high load performance can be improved further, and accordingly, the warming performance and the high load performance can be made balanced at the higher level.

In a preferred aspect, the former stage part includes a former stage lower layer formed on a surface of the base material and a former stage upper layer formed on the former stage lower layer, and the former stage upper layer contains rhodium. According to this, the warming performance and the high load performance can be made balanced at the higher level.

In a preferred aspect, the alumina content in the former stage upper layer is 5 g/L or more and 25 g/L or less. According to this, the warming performance can be improved further, and the warming performance and the high load performance can be made balanced at the higher level.

In a preferred aspect, the latter stage part includes a latter stage lower layer formed on the surface of the base material and a latter stage upper layer formed on the latter stage lower layer, the former stage upper layer and the latter stage upper layer contain rhodium, and the former stage lower layer and the latter stage lower layer contain palladium. According to this, the warming performance and the high load performance can be made balanced at the higher level.

### [Brief Description of Drawings]

Fig. 1 is a schematic diagram of an exhaust gas purifying system according to an embodiment of the present invention.
Fig. 2 is a perspective diagram schematically showing an exhaust gas purification catalyst in Fig. 1.
Fig. 3 is a schematic structure diagram schematically showing a structure of a part of a rib wall of the exhaust gas purification catalyst in Fig. 1.
Fig. 4 is a graph showing a relation between a coating amount ratio (Y2/Y1) and NOx-WU (warming performance).
Fig. 5 is a graph showing a relation between the coating amount ratio (Y2/Y1) and NOx-T50 at temperature decrease (high load performance).

### [Description of Embodiment]

A preferred embodiment of the present invention will be described below with reference to the drawings. It should be noted that matters other than matters particularly mentioned in the present specification and necessary for the implementation of the present invention can be grasped as design matters of those skilled in the art based on the prior art in the relevant field. The present invention can be carried out based on the contents disclosed in this specification and technical common knowledge in the field. In the drawings below, the members and parts with the same action are denoted with the same reference symbols and the overlapping description may be omitted or simplified. In the present specification, the notation "A to B" (A and B are arbitrary numerals) for a range signifies a value not less than A and not more than B, and also encompasses the meaning of being "preferably more than A" and "preferably less than B".

### «Exhaust gas purifying system»

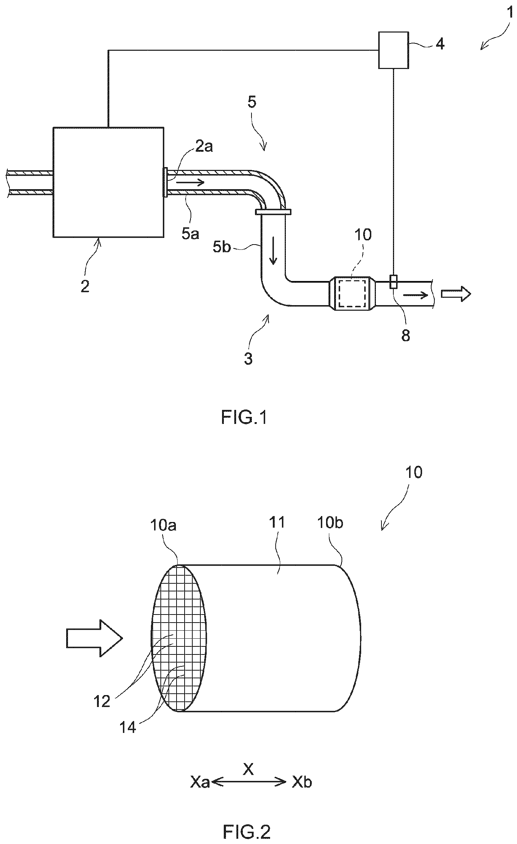

Fig. 1 is a schematic diagram of an exhaust gas purifying system 1. The exhaust gas purifying system 1 includes an internal-combustion engine (engine) 2, an exhaust gas purifying device 3, and an engine control unit (ECU) 4. The exhaust gas purifying system 1 is configured to purify harmful components, such as NOx, HC, and CO, in the exhaust gas emitted from the internal-combustion engine 2, in the exhaust gas purifying device 3. It should be noted that arrows in Fig. 1 indicate a flowing direction of the exhaust gas. In the description below, along the flow of the exhaust gas, the side closer to the internal-combustion engine 2 is referred to as an upstream side and the side farther from the internal-combustion engine 2 is referred to as a downstream side.

The internal-combustion engine 2 is configured here using a gasoline engine of a vehicle as a main body. The internal-combustion engine 2 may alternatively be an engine other than the gasoline engine (for example, a diesel engine or an engine mounted on a hybrid vehicle). The internal-combustion engine 2 includes a plurality of combustion chambers (not shown). Each combustion chamber is connected to a fuel tank (not shown). The fuel tank stores gasoline here. The fuel to be stored in the fuel tank may alternatively be diesel fuel (light oil) or the like. In the combustion chamber, the fuel gas supplied from the fuel tank is combusted. The combustion chamber communicates with an exhaust port 2a. The exhaust port 2a communicates with the exhaust gas purifying device 3. The combusted fuel gas turns into exhaust gas, which is then emitted to the exhaust gas purifying device 3.

The exhaust gas purifying device 3 includes an exhaust path 5 that communicates with the internal-combustion engine 2, an oxygen sensor 8, and an exhaust gas purification catalyst 10. The exhaust path 5 is an exhaust gas flow channel where the exhaust gas flows. The exhaust path 5 includes an exhaust manifold 5a and an exhaust pipe 5b. An upstream end part of the exhaust manifold 5a is connected to the exhaust port 2a of the internal-combustion engine 2. A downstream end part of the exhaust manifold 5a is connected to the exhaust pipe 5b. In the middle of the exhaust pipe 5b, the exhaust gas purification catalyst 10 is disposed. The exhaust gas purifying device 3 is configured so that, here, one exhaust gas purification catalyst 10 purifies the harmful components in the exhaust gas. However, the number of exhaust gas purification catalysts 10 is not limited in particular and may be more than one. In that case, the exhaust gas purification catalysts 10 may have different structures or functions. The structure and the like of the exhaust gas purification catalyst 10 will be described in detail below.

The ECU 4 controls the internal-combustion engine 2 and the exhaust gas purifying device 3. The ECU 4 is electrically connected to the internal-combustion engine 2 and the exhaust gas purifying device 3. The ECU 4 is electrically connected to a sensor (for example, oxygen sensor 8) disposed at each part of the exhaust gas purifying device 3. The structure of the ECU 4 may be similar to the conventional structure without particular limitations. The ECU 4 is, for example, a processor or an integrated circuit. The ECU 4 includes an input port (not shown) and an output port (not shown). The ECU 4 receives, for example, information about the operation state of the vehicle, the amount of exhaust gas emitted from the internal-combustion engine 2, the temperature of the exhaust gas, the pressure of the exhaust gas, and the like through the input port. The ECU 4 receives information detected by the sensor (for example, the amount of oxygen measured by the oxygen sensor 8) through the input port.

The ECU 4 transmits a control signal through the output port on the basis of the received information, for example. The ECU 4 controls the operation, for example, controls the fuel injection or ignition of the internal-combustion engine 2 and controls to regulate the amount of intake air. The ECU 4 controls the driving and stopping of the exhaust gas purifying device 3 on the basis of the operation state of the internal-combustion engine 2, for example.

### <<Exhaust gas purification catalyst>>

Fig. 2 is a perspective diagram schematically showing the exhaust gas purification catalyst 10. It should be noted that an arrow in Fig. 2 indicates the flow of the exhaust gas. In Fig. 2, the upstream side of the exhaust path 5, which is relatively close to the internal-combustion engine 2, is shown on the left side and the downstream side of the exhaust path, which is relatively far from the internal-combustion engine 2, is shown on the right side. Moreover, in Fig. 2, reference symbol X denotes a cylinder axis direction of the exhaust gas purification catalyst 10. The exhaust gas purification catalyst 10 is disposed in the exhaust path 5 so that the cylinder axis direction X extends along the flowing direction of the exhaust gas. The cylinder axis direction X corresponds to the flowing direction of the exhaust gas. In the description below, in the cylinder axis direction X, one direction Xa may be referred to as the upstream side (also referred to as exhaust gas inflow side or front side) and the other direction Xb may be referred to as the downstream side (also referred to as exhaust gas outflow side or rear side). However, these are merely the directions for the convenience of description and will not limit the mode of installing the exhaust gas purification catalyst 10.

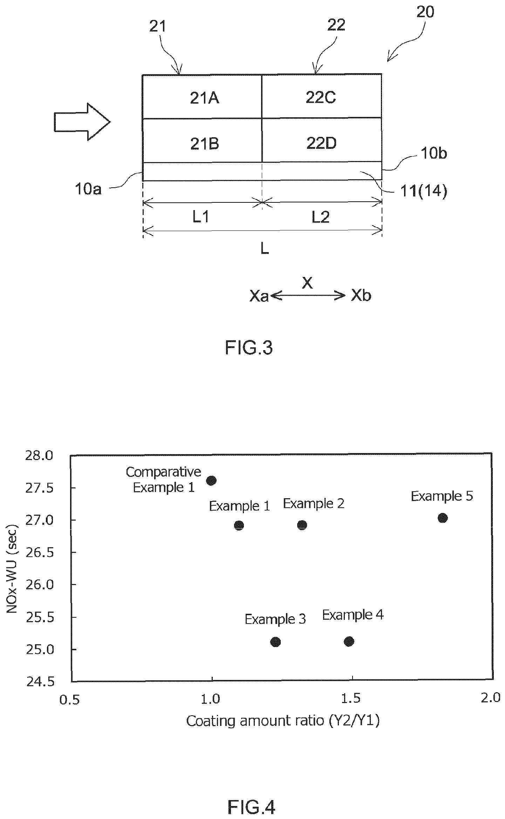

The exhaust gas purification catalyst 10 has a function of purifying NOx in the exhaust gas. An end part of the exhaust gas purification catalyst 10 in the one direction Xa corresponds to an exhaust gas inlet 10a and an end part thereof in the other direction Xb corresponds to an exhaust gas outlet 10b. The outer shape of the exhaust gas purification catalyst 10 is circular cylindrical here. However, the outer shape of the exhaust gas purification catalyst 10 is not limited in particular and may be, for example, an elliptical cylindrical shape, a polygonal cylindrical shape, a pipe-like shape, a foam-like shape, a pellet shape, a fibrous shape, or the like. The exhaust gas purification catalyst 10 includes a base material 11 with a straight flow type, and a catalyst coated layer 20 (see Fig. 3).

### <Base material>

The base material 11 forms the frame of the exhaust gas purification catalyst 10. The base material 11 is not particularly limited and various materials and various modes that have conventionally been employed in this type of applications can be used. The base material 11 may be, for example, a ceramic carrier formed of ceramic such as cordierite, aluminum titanate, or silicon carbide, or a metal carrier formed of stainless steel (SUS), Fe-Cr-Al-based alloy, Ni-Cr-Al-based alloy, or the like. As shown in Fig. 2, the base material 11 according to the present embodiment has a honeycomb structure. The base material 11 includes a plurality of cells (cavities) 12 arrayed regularly in the cylinder axis direction X, and partition walls (rib walls) 14 that section the cells 12. Although not particularly limited, the volume of the base material 11 may be generally 0.1 to 10 L, for example 1 to 5 L. Additionally, the length (total length) of the base material 11 along the cylinder axis direction X may be generally 10 to 500 mm, for example 50 to 300 mm. In the present specification, "the volume of the base material 11" refers to the apparent volume (bulk capacity) including the capacity of the cells 12 on the inside in addition to the volume (pure volume) of the base material 11 itself.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 may be designed in consideration of, for example, the flow rate, the component, and the like of the exhaust gas to be supplied to the exhaust gas purification catalyst 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a wavy shape, a circular shape, or various other geometric shapes. The rib wall 14 faces the cell 12 and sections between the adjacent cells 12. Although not particularly limited, the thickness of the rib wall 14 (the size in a direction orthogonal to the surface, this definition similarly applies to the description below) may be generally 0.1 to 10 mil (1 mil is equal to about 25.4 µm) and for example, 0.2 to 5 mil from the viewpoints of improving the mechanical strength or reducing the pressure loss, for example.

### <Catalyst coated layer>

The catalyst coated layer 20 is a field where the exhaust gas is purified. The catalyst coated layer 20 is a porous body with a number of communicating pores. The exhaust gas having entered the exhaust gas purification catalyst 10 is in contact with the catalyst coated layer 20 while flowing in the flow channel (cell 12) of the exhaust gas purification catalyst 10. Thus, the harmful components in the exhaust gas are purified.

In the present embodiment, the catalyst coated layer 20 contains at least a precious metal catalyst and alumina. The precious metal catalyst is a catalyst that oxidizes and/or reduces the harmful components in the exhaust gas. The precious metal catalyst is not limited in particular and one kind or two or more kinds among various precious metals conventionally employed in this type of applications can be used as appropriate. Examples thereof include a platinum group including rhodium (Rh), palladium (Pd), platinum (Pt), ruthenium (Ru), osmium (Os), iridium (Ir), and the like, silver (Ag), gold (Au), and the like. Among them, at least one of Pd and Pt with high oxidation activity, and Rh with high reduction activity are preferably used in combination.

Alumina (Al₂O₃) is a porous body forming a skeleton part of the catalyst coated layer 20. Alumina is a carrier material that carriers the precious metal catalyst typically. Alumina has high heat resistance and high durability. With alumina contained in the catalyst coated layer 20, the thermal stability and the durability of the catalyst coated layer 20 can be improved. It should be noted that alumina has a specific heat of about 0.75 to 0.85 kJ/(kg-K). Alumina generally has higher specific heat than other carrier materials that have been used conventionally in this type of applications, such as cerium oxide (ceria), zirconium oxide (zirconia), silicon oxide (silica), and titanium oxide (titania). In other words, alumina does not become warm easily. Therefore, by adjusting the alumina content with respect to the flowing direction of the exhaust gas (preferably, changing the alumina content along the flowing direction of the exhaust gas), the warming performance and the high load performance of the catalyst coated layer 20 can be adjusted suitably, which will be described in detail below.

It should be noted that the catalyst coated layer 20 may contain an optional component as appropriate in addition to the precious metal catalyst and alumina. Examples of such an optional component include: OSC materials with oxygen storage capability, such as ceria or complex oxide containing ceria (for example, ceria-zirconia complex oxide); porous carriers (non-OSC materials) other than alumina described above, for example rare-earth metal oxide such as zirconia, silica, or titania; alkaline-earth metal elements such as calcium (Ca) and barium (Ba); rare-earth metal elements such as yttrium (Y), lanthanum (La), and neodymium (Nd); various additives such as NOx absorber with NOx absorbing capability; and the like. In the catalyst coated layer 20, the content ratio of the each optional component may be, for example, not more than the content ratio of alumina on the mass basis. The total content ratio of the optional components may be, for example, lower than the content ratio of alumina.

Fig. 3 is a schematic structure diagram schematically showing a structure of a part of the rib wall 14 of the exhaust gas purification catalyst 10. In Fig. 3, a part of the cross section taken along the cylinder axis direction X is schematically shown. It should be noted that an arrow in Fig. 3 indicates the flowing direction of the exhaust gas. The catalyst coated layer 20 is provided on a surface of the base material 11, specifically on the rib wall 14. However, the catalyst coated layer 20 may entirely or partially permeate into the catalyst coated layer 20. The catalyst coated layer 20 may be provided either continuously or intermittently on the rib wall 14. The total coat width (average length) of the catalyst coated layer 20 in the cylinder axis direction X may be generally 50% or more, typically 80% or more, and preferably 90% or more of a total length L of the base material 11, and may be approximately the same as the total length L of the base material 11, for example. The total coat thickness of the catalyst coated layer 20 (average length in the direction orthogonal to the cylinder axis direction X) may be generally 1 to 300 µm, typically 5 to 100 µm, and for example, about 10 to 50 µm.

In the flowing direction of the exhaust gas (arrow direction in Fig. 3), the catalyst coated layer 20 in Fig. 3 includes a former stage part 21 existing on the upstream side and a latter stage part 22 existing on the downstream side relative to the former stage part 21. The former stage part 21 and the latter stage part 22 each contain the precious metal catalyst and alumina. In addition, the former stage part 21 and the latter stage part 22 each have a multilayer structure in which two catalyst coated layers with different structures are stacked in a thickness direction. Alternatively, the former stage part 21 and/or the latter stage part 22 may have a single layer structure. Further alternatively, the former stage part 21 and/or the latter stage part 22 may have a multilayer structure with three or more layers. The respective parts are described sequentially.

### <Former stage part>

The former stage part 21 is formed along the cylinder axis direction X from the exhaust gas inlet 10a toward the downstream side. A coat width (average length) L1 of the former stage part 21 in the cylinder axis direction X may be designed in consideration of, for example, the size of the base material 11, the flow rate of the exhaust gas flowing in the exhaust gas purification catalyst 10, and the like. In some aspects, the coat width L1 of the former stage part 21 in the cylinder axis direction X satisfies 0.2L ≤ L1, preferably 0.25L ≤ L1 ≤ 0.6L, more preferably L1 ≤ 0.5L, and for example, 0.3L ≤ L1 ≤ 0.5L. According to this, the warming performance and the high load performance can be made balanced at a higher level. It should be noted that in Fig. 3, the former stage part 21 is formed in a part of the base material 11 that corresponds to 50% of the total length L. That is to say, L1 = 0.5L is satisfied.

The former stage part 21 preferably contains at least Rh as the precious metal catalyst, and more preferably contains Rh and Pd. A total content M1 of the precious metal catalyst in the former stage part 21 is preferably larger than a content M2 of the precious metal catalyst in the latter stage part 22 on the mass basis. That is to say, M2 < M1 is preferably satisfied. Although not particularly limited, the content (mass) M1 of the precious metal catalyst in the former stage part 21 may be generally 0.1 to 10 g, preferably 1 to 5 g, and for example, 1.5 to 3 g per liter of the volume of base material in terms of oxide from the viewpoints of improving the warming performance and the like. According to this, the warming performance and the high load performance can be made balanced at the higher level.

In the present embodiment, an alumina content X1 (g/L) in the former stage part 21 per volume of the base material is not more than an alumina content X2 (g/L) in the latter stage part 22 per volume of the base material. That is to say, X1 ≤ X2 is satisfied, and for example, X1 < X2 is satisfied. Although not particularly limited, the alumina content X1 in the former stage part 21 may be generally 100 g/L or less, 70 g/L or less, preferably 50 g/L or less, and more preferably 45 g/L or less from the viewpoints of increasing the heat resistance of the former stage part 21, improving the warming performance by making it easier for the former stage part 21 to become warm, and the like. Additionally, from the viewpoints of making the warming performance and the high load performance balanced and the like, the alumina content X1 may be generally 5 g/L or more, 10 g/L or more, preferably 20 g/L or more, more preferably 30 g/L or more, and for example, 34 g/L or more.

In the present embodiment, a coating amount Y1 (g/L) in the former stage part 21 per volume of the base material is smaller than a coating amount Y2 (g/L) in the latter stage part 22 per volume of the base material. That is to say, Y1 < Y2 is satisfied. Although not particularly limited, the coating amount (formed amount) Y1 in the former stage part 21 may be generally 40 g/L or more, 60 g/L or more, preferably 70 g/L or more, and for example, 74 g/L or more from the viewpoints of increasing the heat resistance of the former stage part 21, making the warming performance and the high load performance balanced at the high level, and the like. Additionally, from the viewpoints of making it easier for the former stage part 21 to become warm so as to improve the warming performance further by increasing the carrying density of the precious metal in the former stage part 21, from the viewpoints of reducing the pressure loss when the exhaust gas flows into the cells 12, and the like, the coating amount Y1 may be generally 200 g/L or less, 150 g/L or less, preferably 110 g/L or less, and for example, 105 g/L or less.

Here, the former stage part 21 includes a former stage lower layer 21B formed on the surface of the base material 11 (specifically, the rib wall 14) and a former stage upper layer 21A formed on the former stage lower layer 21B. Although not particularly limited, a ratio (Tb/Ta) of a thickness Tb of the former stage lower layer 21B to a thickness Ta of the former stage upper layer 21A is preferably 1 or more, more preferably 1.5 or more, and still more preferably 2 or more, and for example, 2 to 5 from the viewpoints of improving the warming performance and the like. It should be noted that, between the former stage upper layer 21A and the former stage lower layer 21B, a third layer (intermediate layer) may be provided additionally. The former stage part 21 may include the former stage lower layer 21B, one or two or more intermediate layers, and the former stage upper layer 21A.

### <Former stage upper layer>

The former stage upper layer 21Ais a part existing on the side farthest from the base material 11 in a thickness direction of the former stage part 21. The former stage upper layer 21Ais a part of the catalyst coated layer 20 that is first brought into contact with the exhaust gas coming from the exhaust gas inlet 10a. The former stage upper layer 21A forms a surface layer (surface part) of the former stage part 21. The former stage upper layer 21A contains at least the precious metal catalyst and alumina here. The former stage upper layer 21A may further contain the optional component as described above. The former stage upper layer 21A preferably contains at least Rh as the precious metal catalyst. According to this, the warming performance and the high load performance can be made balanced at the higher level.

Although not particularly limited, the carrying density of the precious metal catalyst (for example, Rh) in the former stage upper layer 21A is preferably 0.01 g or more, more preferably 0.05 g or more, and still more preferably 0.1 g or more per liter of the volume of the base material from the viewpoints of improving the warming performance and the like. Additionally, from the viewpoints of increasing the catalyst reactivity by suppressing sintering of the precious metal, and the like, the carrying density is preferably 3 g or less, more preferably 2 g or less, and still more preferably 1 g or less per liter of the volume of the base material.

Although not particularly limited, an alumina content A_{Al} in the former stage upper layer 21A may be generally 50 g or less, 30 g or less, preferably 25 g or less, and for example, 20 g or less per liter of the volume of the base material from the viewpoints of increasing the heat resistance, improving the warming performance, and the like. From the viewpoints of making the warming performance and the high load performance balanced and the like, the alumina content A_{Al} in the former stage upper layer 21A may be generally 1 g or more, preferably 3 g or more, more preferably 5 g or more, and for example, 10 g or more per liter of the volume of the base material and from the viewpoints of achieving the excellent NOx purifying performance even at the high load and the like, the alumina content A_{Al} may be preferably 5 to 30 g, more preferably 10 to 30 g, and for example, 15 to 25 g.

The former stage upper layer 21A preferably contains an OSC material (for example, ceria-zirconia complex oxide) as the optional component. According to this, the excellent warming performance can be achieved more stably. Although not particularly limited, a content A_{OSC} of the OSC material in the former stage upper layer 21A may be generally 1 to 50 g, preferably 5 to 45 g, more preferably 10 to 40 g, and for example, 20 to 30 g per liter of the volume of the base material. In some aspects, the content A_{OSC} of the OSC material may be not less than the alumina content A_{Al} (that is, A_{Al} ≤ A_{OSC} may be satisfied) from the viewpoints of increasing the OSC capability more suitably and the like. In some aspects, a mass ratio (A_{OSC}/A_{Al}) of the content A_{OSC} of the OSC material to the alumina content A_{Al} may be preferably 0.1 to 10 and more preferably 1 to 5 from the viewpoints of improving the warming performance and the like.

Although not particularly limited, a coating amount A_{coat} in the former stage upper layer 21A may be generally 20 g or more, preferably 30 g or more, and more preferably 35 g or more, and generally 100 g or less, preferably 80 g or less, more preferably 60 g or less, and for example, 55 g or less per liter of the volume of the base material from the viewpoints of increasing the heat resistance, making the warming performance and the high load performance balanced, and the like.

### <Former stage lower layer>

The former stage lower layer 21B is a part of the former stage part 21 that is in contact with the rib wall 14. The former stage lower layer 21B contains at least the precious metal catalyst and alumina here. The former stage lower layer 21B may further contain the optional component as described above. When the former stage upper layer 21A contains Rh as the precious metal catalyst, the former stage lower layer 21B preferably contains at least Pd. According to this, the warming performance and the high load performance can be made balanced at the higher level.

Although not particularly limited, the carrying density of the precious metal catalyst (for example, Pd) in the former stage lower layer 21B is preferably 0.1 g or more, more preferably 0.2 g or more, still more preferably 0.5 g or more, and for example, 1 g or more, and preferably 10 g or less, more preferably 5 g or less, still more preferably 3 g or less, and for example, 2 g or less per liter of the volume of the base material from the viewpoints of improving the warming performance and the like. In some aspects, it is preferable that the carrying density of the precious metal catalyst (for example, Pd) in the former stage lower layer 21B is higher than the carrying density of the precious metal catalyst (for example, Rh) in the former stage upper layer 21A and is generally twice or more, for example three times or more, five times or more, and 10 times or more, and generally 50 times or less, for example 30 times or less, and 20 times or less the carrying density in the former stage upper layer 21A. According to this, the warming performance and the high load performance can be made balanced at the higher level.

Although not particularly limited, an alumina content B_{Al} in the former stage lower layer 21B may be generally 50 g or less, 30 g or less, preferably 25 g or less, and for example, 20 g or less per liter of the volume of the base material from the viewpoints of increasing the heat resistance, improving the warming performance, and the like. From the viewpoints of making the warming performance and the high load performance balanced and the like, the alumina content B_{Al} in the former stage lower layer 21B may be generally 1 g or more, preferably 3 g or more, more preferably 5 g or more, and for example, 10 g or more per liter of the volume of the base material and from the viewpoints of achieving the excellent NOx purifying performance even at the high load and the like, the alumina content B_{Al} may be more preferably 10 to 30 g, and for example, 15 to 25 g.

In some aspects, the alumina content B_{Al} in the former stage lower layer 21B may be not more than the alumina content A_{Al} in the former stage upper layer 21A, that is, B_{Al} ≤ A_{Al} may be satisfied. The alumina content B_{Al} may be approximately the same as the alumina content A_{Al} in the former stage upper layer 21A, that is, B_{Al} ≅ A_{Al} may be satisfied (errors in manufacture and the like are allowable). The alumina content B_{Al} may satisfy 0.5A_{Al} ≤ B_{coat} ≤ 1.5A_{Al}, and preferably 0.8A_{Al} ≤ B_{Al} ≤ 1.2A_{Al}. In some aspects, the alumina content B_{Al} may satisfy 1.2B_{Al} ≤ A_{Al}. According to this, the heat resistance and the durability of the former stage part 21 can be improved, and the warming performance and the high load performance can be exerted stably for a long time.

The former stage lower layer 21B preferably contains the OSC material (for example, ceria-zirconia complex oxide) as the optional component. According to this, the excellent warming performance can be achieved more stably. Although not particularly limited, a content Bose of the OSC material in the former stage lower layer 21B may be generally 1 to 50 g, preferably 5 to 40 g, more preferably 7 to 30 g, and for example, 10 to 20 g per liter of the volume of the base material. In some aspects, the content Bose of the OSC material may be not more than the alumina content B_{Al} (that is, B_{OSC} ≤ B_{Al} may be satisfied). A mass ratio (B_{OSC}/B_{Al}) of the content Bose of the OSC material to the alumina content B_{Al} may be preferably 0.1 to 0.9, and more preferably 0.5 o to 0.8.

In some aspects, the content Bose of the OSC material in the former stage lower layer 21B may be not more than the content A_{OSC} of the OSC material in the former stage upper layer 21A, that is, Bose ≤ Aosc may be satisfied. The content Bose may satisfy preferably Bose ≤ 0.8A_{OSC}, more preferably B_{OSC} ≤ 0.7Aosc, and for example, B_{OSC} ≤ 0.6Aosc. According to this, the warming performance and the high load performance can be made balanced at the higher level.

Although not particularly limited, a coating amount B_{coat} in the former stage lower layer 21B may be generally 20 g or more, preferably 30 g or more, and more preferably 35 g or more, and generally 100 g or less, preferably 80 g or less, and more preferably 50 g or less per liter of the volume of the base material from the viewpoints of increasing the heat resistance, making the warming performance and the high load performance balanced, and the like.

In some aspects, the coating amount B_{coat} in the former stage lower layer 21B may be approximately the same as the coating amount A_{coat} in the former stage upper layer 21A, that is, B_{coat} ≅ A_{coat} may be satisfied (errors in manufacture and the like are allowable). The coating amount B_{coat} may satisfy 0.5A_{coat} ≤ B_{coat} ≤ 1.5A_{coat}, and preferably 0.8A_{coat} ≤ B_{coat} ≤ 1.2A_{coat}. According to this, the pressure loss can be reduced and moreover, the warming performance and the high load performance can be made balanced at the higher level. Furthermore, the durability and the heat resistance of the former stage part 21 can be improved.

### <Latter stage part>

The latter stage part 22 is formed along the cylinder axis direction X from the exhaust gas outlet 10b toward the upstream side. A coat width (average length) L2 of the latter stage part 22 in the cylinder axis direction X may be designed in consideration of, for example, the size of the base material 11, the flow rate of the exhaust gas flowing in the exhaust gas purification catalyst 10, and the like. In some aspects, the coat width L2 of the latter stage part 22 in the cylinder axis direction X is not less than the coat width L1 of the former stage part 21 in the cylinder axis direction X. The coat width L2 satisfies typically 0.3L ≤ L2, preferably 0.4L ≤ L2 ≤ 0.8L, and more preferably 0.5L ≤ L2 ≤ 0.7L. According to this, the warming performance and the high load performance can be made balanced at the higher level. It should be noted that in Fig. 3, the latter stage part 22 is formed in a part of the base material 11 that corresponds to 50% of the total length L. That is to say, L2 = 0.5L is satisfied.

The latter stage part 22 preferably contains at least Pd as the precious metal catalyst, and more preferably contains Rh and Pd. Although not particularly limited, the content (mass) M2 of the precious metal catalyst in the latter stage part 22 may be generally 0.1 to 5 g, preferably 0.2 to 3 g, and for example, 0.5 to 2 g per liter of the volume of the base material in terms of oxide from the viewpoints of improving the high load performance and the like. According to this, the warming performance and the high load performance can be made balanced at the higher level.

In the present embodiment, the alumina content X2 (g/L) in the latter stage part 22 per volume of the base material is not less than the alumina content X1 (g/L) in the former stage part 21 per volume of the base material. Although not particularly limited, the alumina content X1 in the latter stage part 22 may be generally 5 g/L or more, 10 g/L or more, preferably 30 g/L or more, for example 40 g/L or more, 45 g/L or more, and more preferably 50 g/L or more from the viewpoints of increasing the heat resistance of the latter stage part 22, improving the high load performance further by increasing the heat retaining property of the latter stage part 22, and the like. Additionally, from the viewpoints of making the warming performance and the high load performance balanced and the like, the alumina content X1 may be generally 100 g/L or less, preferably 80 g/L or less, 70 g/L or less, and more preferably 65 g/L or less.

In some aspects, a ratio (X2/X1) of the alumina content X2 to the alumina content X1 satisfies the following expression: 1.0 ≤ (X2/X1) ≤ 2.0. The alumina content ratio (X2/X1) may be generally 1.05 or more and for example, 1.1 or more, and generally 1.9 or less and preferably 1.5 or less. By allowing alumina with high specific heat to be contained in a large quantity in the latter stage part 22, the heat capacity of the latter stage part 22 can be increased. According to this, the heat retaining performance can be improved, and both the warming performance and the high load performance can be obtained at the high level.

In the present embodiment, the coating amount Y2 (g/L) in the latter stage part 22 per volume of the base material is larger than the coating amount Y1 (g/L) in the former stage part 21 per volume of the base material. Although not particularly limited, the coating amount (formed amount) Y2 in the latter stage part 22 may be generally 50 g/L or more, 70 g/L or more, preferably 100 g/L or more, and more preferably 110 g/L or more from the viewpoints of increasing the heat resistance of the latter stage part 22, improving the high load performance further by increasing the heat retaining property of the latter stage part 22, and the like. Additionally, from the viewpoints of reducing the pressure loss, improving the catalyst reactivity in the latter stage part 22 by increasing the carrying density of the precious metal in the latter stage part 22 so as to make the warming performance and the high load performance balanced at the high level, and the like, the coating amount Y2 may be generally 200 g/L or less, 170 g/L or less, preferably 160 g/L or less, 150 g/L or less, 140 g/L or less, and more preferably 135 g/L or less.

In the present embodiment, a ratio (Y2/Y1) of the coating amount Y2 in the latter stage part 22 to the coating amount Y1 in the former stage part 21 satisfies the following expression: 1.0 < (Y2/Y1) ≤ 2.0. The coating amount ratio (Y2/Y1) may be generally 1.02 or more, preferably 1.05 or more, more preferably 1.1 or more, and still more preferably 1.2 or more, and generally 1.9 or less, preferably 1.8 or less, and more preferably 1.5 or less. According to this, the warming performance and the high load performance can be made balanced at the higher level.

Here, the latter stage part 22 includes a latter stage lower layer 22D formed on the surface of the base material 11 (specifically, the rib wall 14) and a latter stage upper layer 22C formed on the latter stage lower layer 22D. Although not particularly limited, a ratio (Td/Tc) of a thickness Td of the latter stage lower layer 22D to a thickness Tc of the latter stage upper layer 22C is preferably 1 or more, more preferably 1.5 or more, and still more preferably 2 or more, and for example, 2 to 5. It should be noted that, between the latter stage upper layer 22C and the latter stage lower layer 22D, a third layer (intermediate layer) may be provided additionally. The latter stage part 22 may include the latter stage lower layer 22D, one or two or more intermediate layers, and the latter stage upper layer 22C.

### <Latter stage upper layer>

The latter stage upper layer 22C is a part existing on the side farthest from the base material 11 in a thickness direction of the latter stage part 22. The latter stage upper layer 22C forms a surface layer (surface part) of the latter stage part 22. The latter stage upper layer 22C contains at least the precious metal catalyst and alumina here. The latter stage upper layer 22C may further contain the optional component as described above. The latter stage upper layer 22C preferably contains at least Rh as the precious metal catalyst. According to this, the warming performance and the high load performance can be made balanced at the higher level.

Although not particularly limited, the carrying density of the precious metal catalyst (for example, Rh) in the latter stage upper layer 22C is preferably 0.01 g or more, more preferably 0.05 g or more, and still more preferably 0.1 g or more, and preferably 3 g or less, more preferably 2 g or less, and still more preferably 1 g or less per liter of the volume of the base material from the viewpoints of increasing the catalyst reactivity in the latter stage part 22 by suppressing the sintering of the precious metal, so as to improve the high load performance, and the like. In some aspects, the carrying density of the precious metal catalyst (for example, Rh) in the latter stage upper layer 22C may be approximately equal to the carrying density of the precious metal catalyst (for example, Rh) in the former stage upper layer 21A. For example, the absolute difference in carrying density therebetween may be generally within 0.2 g and for example, within 0.1 g per liter of the volume of the base material.

Although not particularly limited, an alumina content C_{Al} in the latter stage upper layer 22C may be generally 1 g or more, 5 g or more, preferably 10 g or more, 20 g or more, and for example, 25 g or more, and generally 100 g or less, 50 g or less, and preferably 40 g or less per liter of the volume of the base material from the viewpoints of increasing the heat resistance, improving the high load performance, and the like, and may be still more preferably 25 to 35 g from the viewpoints of achieving the excellent NO_{X} purifying performance even at the high load and the like.

In some aspects, the alumina content C_{Al} in the latter stage upper layer 22C may be not less than the alumina content A_{Al} in the former stage upper layer 21A, that is, A_{Al} ≤ C_{Al} may be satisfied. The alumina content C_{Al} may be approximately the same as the alumina content A_{Al} in the former stage upper layer 21A, that is, C_{Al} ≅ A_{Al} may be satisfied (errors in manufacture and the like are allowable). The alumina content C_{Al} may satisfy 0.5A_{Al} ≤ C_{Al} ≤ 1.5A_{Al}, and preferably 0.8A_{Al} ≤ C_{Al} ≤ 1.2A_{Al}. In some aspects, the alumina content C_{Al} may satisfy preferably 1.2A_{Al} ≤ C_{Al}, more preferably 1.4A_{Al} ≤ C_{Al}, and for example, 1.5A_{Al} ≤ B_{Al} ≤ 3A_{Al}. Thus, the heat retaining property of the latter stage part 22 can be increased suitably and the warming performance and the high load performance can be made balanced at the higher level.

The latter stage upper layer 22C preferably contains the OSC material (for example, ceria-zirconia complex oxide) as the optional component. According to this, the heat retaining property of the latter stage part 22 can be increased suitably and the excellent high load performance can be achieved more stably. Although not particularly limited, a content Cose of the OSC material in the latter stage upper layer 22C may be generally 1 to 100 g, preferably 5 to 70 g, more preferably 10 to 50 g, and for example, 15 to 35 g per liter of the volume of the base material. In some aspects, the content Cose of the OSC material may be not less than the alumina content C_{Al} (that is, C_{Al} ≤ Cosc may be satisfied) from the viewpoints of increasing the OSC capability more suitably and the like. In some aspects, the content Cose of the OSC material in the latter stage upper layer 22C may be approximately equal to the content A_{OSC} of the OSC material in the former stage upper layer 21A. For example, the absolute difference in content therebetween may be generally within 5 g, for example within 2 g, and within 1 g.

Although not particularly limited, a coating amount C_{coat} in the latter stage upper layer 22C may be generally 30 g or more, preferably 40 g or more, and more preferably 50 g or more, and generally 100 g or less, preferably 80 g or less, more preferably 70 g or less, and for example, 65 g or less per liter of the volume of the base material from the viewpoints of increasing the heat resistance, making the warming performance and the high load performance balanced, and the like.

In some aspects, the coating amount C_{coat} in the latter stage upper layer 22C may be not less than the coating amount A_{coat} in the former stage upper layer 21A, that is, A_{coat} ≤ C_{coat} may be satisfied. The coating amount C_{coat} in the latter stage upper layer 22C may be approximately the same as the coating amount A_{coat} in the former stage upper layer 21A, that is, C_{coat} ≅ A_{coat} may be satisfied (errors in manufacture and the like are allowable). The coating amount C_{coat} may satisfy 0.5A_{coat} ≤ C_{coat} ≤ 1.5A_{coat} and preferably 0.8A_{coat} ≤ C_{coat} ≤ 1.2A_{coat}. In some aspects, the coating amount C_{coat} may satisfy preferably 1.2A_{coat} ≤ C_{coat}, more preferably 1.4A_{coat} ≤ C_{coat}, and for example, 1.5A_{coat} ≤ C_{coat} ≤ 3A_{coat}. According to this, the heat retaining property of the latter stage part 22 can be increased further and the warming performance and the high load performance can be made balanced at the higher level.

### <Latter stage lower layer>

The latter stage lower layer 22D is a part of the latter stage part 22 that is in contact with the rib wall 14. The latter stage lower layer 22D contains at least the precious metal catalyst and alumina here. The latter stage lower layer 22D may further contain the optional component as described above. When the latter stage upper layer 22C contains Rh as the precious metal catalyst, the latter stage lower layer 22D preferably contains at least Pd. According to this, both the warming performance and the high load performance can be obtained at the higher level.

Although not particularly limited, the carrying density of the precious metal catalyst (for example, Pd) in the latter stage lower layer 22D is preferably 0.01 g or more, more preferably 0.05 g or more, and still more preferably 0.1 g or more, and preferably 3 g or less, more preferably 2 g or less, and still more preferably 1 g or less per liter of the volume of the base material from the viewpoints of increasing the heat retaining performance of the latter stage part 22, improving the high load performance, and the like. In some aspects, it is preferable that the carrying density of the precious metal catalyst (for example, Pd) in the latter stage lower layer 22D is higher than the carrying density of the precious metal catalyst (for example, Rh) in the latter stage upper layer 22C and is generally twice or more, for example three times or more, and five times or more, and generally 20 times or less and for example, 10 times or less the carrying density in the latter stage upper layer 22C. According to this, the warming performance and the high load performance can be made balanced at the higher level.

Although not particularly limited, an alumina content D_{Al} in the latter stage lower layer 22D may be generally 1 g or more, preferably 3 g or more, more preferably 5 g or more, and for example, 10 g or more and 20 g or more, and generally 50 g or less, 40 g or less, and preferably 30 g or less per liter of the volume of the base material from the viewpoints of increasing the heat resistance, improving the high load performance, and the like, and may be preferably 20 to 30 g from the viewpoints of achieving the excellent NOx purifying performance even at the high load and the like.

In some aspects, the alumina content D_{Al} in the latter stage lower layer 22D may be not less than the alumina content C_{Al} in the latter stage upper layer 22C, that is, C_{Al} ≤ D_{Al} may be satisfied. The alumina content D_{Al} may be approximately the same as the alumina content C_{Al} in the latter stage upper layer 22C, that is, C_{Al} ≅ D_{Al} may be satisfied (errors in manufacture and the like are allowable). The alumina content D_{Al} may satisfy 0.5C_{Al} ≤ D_{Al} ≤ 1.5C_{Al} and preferably 0.8C_{Al} ≤ D_{Al} ≤ 1.2C_{Al}. In some aspects, the alumina content D_{Al} may satisfy preferably 1.2C_{Al} ≤ D_{Al} and for example, 1.3C_{Al} ≤ D_{Al} ≤ 3C_{Al}. According to this, the heat resistance and the durability of the latter stage part 22 can be improved and the warming performance and the high load performance can be exerted stably for a long time. In some aspects, the alumina content D_{Al} in the latter stage lower layer 22D may be not less than the alumina content B_{Al} in the former stage lower layer 21B, that is, B_{Al} ≤ D_{Al} may be satisfied. According to this, the heat retaining property of the latter stage part 22 can be improved further.

The latter stage lower layer 22D preferably contains the OSC material (for example, ceria-zirconia complex oxide) as the optional component. According to this, the heat retaining property of the latter stage part 22 can be increased suitably and the excellent high load performance can be achieved more stably. Although not particularly limited, a content Dose of the OSC material in the latter stage lower layer 22D may be generally 1 to 50 g, preferably 5 to 45 g, more preferably 10 to 40 g, and for example, 20 to 30 g per liter of the volume of the base material. In some aspects, the content Dose of the OSC material may be not more than the alumina content D_{Al} (that is, D_{OSC} ≤ D_{Al} may be satisfied).

In some aspects, the content Dose of the OSC material in the latter stage lower layer 22D may be approximately equal to the content Cose of the OSC material in the latter stage upper layer 22C. For example, the absolute difference in content therebetween may be generally within 5 g, for example within 2 g, and within 1 g. In some aspects, the content Dose of the OSC material in the latter stage lower layer 22D may be not more than the content Cose of the OSC material in the latter stage upper layer 22C, that is, D_{OSC} ≤ Cose may be satisfied. The content Dose may satisfy preferably D_{OSC} ≤ 0.8Cosc, more preferably D_{OSC} ≤ 0.7Cosc, and for example, D_{OSC} ≤ 0.6Cosc. According to this, the warming performance and the high load performance can be made balanced at the higher level.

Although not particularly limited, a coating amount D_{coat} in the latter stage lower layer 22D may be generally 30 g or more, preferably 40 g or more, more preferably 50 g or more, and for example, 60 g or more, and generally 200 g or less, preferably 150 g or less, more preferably 100 g or less, and for example, 80 g or less or 75 g or less per liter of the volume of the base material from the viewpoints of increasing the heat resistance, making the warming performance and the high load performance balanced, and the like.

In some aspects, the coating amount D_{coat} in the latter stage lower layer 22D may be not less than the coating amount C_{coat} in the latter stage upper layer 22C, that is, C_{coat} ≤ D_{coat} may be satisfied. The coating amount D_{coat} may satisfy preferably D_{coat} ≤ 1.1C_{coat}, and for example, 1.2C_{coat} ≤ D_{coat} ≤ 2C_{coat}. According to this, the durability and the heat resistance of the latter stage part 22 can be improved and the warming performance and the high load performance can be made balanced at the higher level. In some aspects, the coating amount D_{coat} in the latter stage lower layer 22D may be not less than the coating amount B_{coat} in the former stage lower layer 21B, that is, B_{coat} ≤ D_{coat} may be satisfied. According to this, the heat retaining property of the latter stage part 22 can be improved further.

The catalyst coated layer 20 with a structure as described above can be manufactured by the following method, for example. That is to say, first, the base material 11 and slurries for forming the catalyst coated layer 20 are prepared. The slurry is prepared for each layer to be formed. Here, four kinds of slurries, specifically a slurry for forming the former stage upper layer 21A (for former stage upper layer formation), a slurry for forming the former stage lower layer 21B (for former stage lower layer formation), a slurry for forming the latter stage upper layer 22C (for latter stage upper layer formation), and a slurry for forming the latter stage lower layer 22D (for latter stage lower layer formation) are prepared. Each slurry contains a precious metal source (for example, solution containing precious metal ion) and alumina as necessary raw material components, and may be prepared by dispersing other optional components such as a binder and various kinds of additives therewith in a dispersant. Examples of the binder include alumina sol and silica sol. Examples of the dispersant include water and an aqueous solvent. The properties of the slurry, for example the viscosity, the solid content ratio, and the like, may be adjusted as appropriate in accordance with, for example, the size and structure of the base material 11, the characteristics required for the catalyst coated layer 20, and the like.

Next, the prepared slurry is poured into the cells 12 from an end part of the base material 11 and supplied to a predetermined length along the cylinder axis direction X. Here, the slurry for the former stage lower layer formation and the slurry for the former stage upper layer formation are poured in this order from the inlet 10a. Moreover, the slurry for the latter stage upper layer formation and the slurry for the latter stage lower layer formation are poured in this order from the outlet 10b. Every time the slurry is supplied, the base material 11 to which the slurry has been supplied may be fired at a predetermined temperature for a predetermined length of time. A firing method may be similar to the conventional one. Thereby, the raw material components are sintered and the catalyst coated layer 20 including the former stage upper layer 21A, the former stage lower layer 21B, the latter stage upper layer 22C, and the latter stage lower layer 22D can be formed in the base material 11.

Although test examples of the present invention will be described below, the present invention is not intended to be limited to these test examples.

Here, exhaust gas purification catalysts including the catalyst coated layer as shown in Fig. 3 (Comparative Examples 1 and 2, and Examples 1 to 5) were manufactured. In the present test examples, the former stage part 21 includes the former stage upper layer 21A and the former stage lower layer 21B. The latter stage part 22 includes the latter stage upper layer 22C and the latter stage lower layer 22D. The ratio between the coat width L1 of the former stage part 21 and the coat width L2 of the latter stage part 22 is 50:50. Here, by changing the coating amounts Y1 and Y2, the influence on the warming performance and the NOx purifying performance was checked. It should be noted that in the following description, "L-cat" means the solid content of the exhaust gas purification catalyst per liter of the volume of the base material.

### (Comparative Example 1)

First, a honeycomb base material made of cordierite (capacity: 1.083 L, total length L of base material: 130 mm, the number of cells: 600 cells, cell cross-sectional shape: rectangular, thickness of partition wall: 2 mil) was prepared. Then, the honeycomb base material was wash-coated with four kinds of slurries (slurries 1 to 4) as follows, so that the catalyst coated layer was formed.

First, a Pd nitrate solution, alumina, a ceria-zirconia complex oxide, and water were mixed to prepare the slurry 1 for the former stage lower layer formation. Next, the slurry 1 was poured into the cells from an upstream end part of the honeycomb base material and a part of the honeycomb base material that corresponds to 50% of the total length from the upstream end part toward a downstream side was wash-coated. The wash-coating was performed with the coating amount set to 50 g/L-cat so that Pd was contained at 2 g/L-cat, alumina was contained at 25 g/L-cat, and ceria-zirconia complex oxide was contained at 15 g/L-cat. Then, drying was performed at 250°C for one hour, which was followed by one-hour sintering at 500°C, so that the former stage lower layer 21B was formed.

First, a Pd nitrate solution, alumina, a ceria-zirconia complex oxide, and water were mixed to prepare the slurry 2 for the latter stage lower layer formation. Next, the slurry 2 was poured into the cells from a downstream end part of the honeycomb base material and a part of the honeycomb base material that corresponds to 50% of the total length from the downstream end part toward the upstream side was wash-coated. The wash-coating was performed with the coating amount set to 50 g/L-cat so that Pd was contained at 0.5 g/L-cat, alumina was contained at 25 g/L-cat, and ceria-zirconia complex oxide was contained at 15 g/L-cat. Then, drying was performed at 250°C for one hour, which was followed by one-hour firing at 500°C, so that the latter stage lower layer 22D was formed.

First, a Rh nitrate solution, alumina, a ceria-zirconia complex oxide, and water were mixed to prepare the slurry 3 for the former stage upper layer formation. Next, the slurry 3 was poured into the cells from the upstream end part of the honeycomb base material and the wash-coating was performed on the former stage lower layer 21B. The wash-coating was performed with the coating amount set to 52 g/L-cat so that Rh was contained at 0.1 g/L-cat, alumina was contained at 25 g/L-cat, and ceria-zirconia complex oxide was contained at 25 g/L-cat. Then, drying was performed at 250°C for one hour, which was followed by one-hour firing at 500°C, so that the former stage upper layer 21A was formed.

First, a Rh nitrate solution, alumina, a ceria-zirconia complex oxide, and water were mixed to prepare the slurry 4 for the latter stage upper layer formation. Next, the slurry 4 was poured into the cells from the downstream end part of the honeycomb base material and the wash-coating was performed on the latter stage lower layer 22D. The wash-coating was performed with the coating amount set to 52 g/L-cat so that Rh was contained at 0.1 g/L-cat, alumina was contained at 25 g/L-cat, and ceria-zirconia complex oxide was contained at 25 g/L-cat. Then, drying was performed at 250°C for one hour, which was followed by one-hour firing at 500°C, so that the latter stage upper layer 22C was formed.

Finally, drying was performed at 120°C for two hours, which was followed by two-hour firing at 500°C, so that the exhaust gas purification catalyst (Comparative Example 1) was manufactured. In Comparative Example 1, the total coating amount (Y1) in the former stage part 21 is 102 g/L-cat and the total alumina content (X1) in the former stage part 21 is 50 g/L-cat. In addition, the total coating amount (Y2) in the latter stage part 22 is 102 g/L-cat, which is the same as that in the former stage part 21, and the total alumina content (X2) in the latter stage part 22 is 50 g/L-cat, which is the same as that in the former stage part 21.

### (Example 1)

The exhaust gas purification catalyst (Example 1) was manufactured in a manner similar to Comparative Example 1 except that the wash-coating with the slurry 1 for the former stage lower layer formation was performed so that alumina was contained at 20 g/L-cat and ceria-zirconia complex oxide was contained at 20 g/L-cat (that is to say, ceria-zirconia complex oxide was increased by the decrease of alumina) and the wash-coating with the slurry 2 for the latter stage lower layer formation was performed so that the coating amount became 60 g/L-cat (coating amount was increased). In Example 1, the total alumina content (X1) in the former stage part 21 is 45 g/L-cat. The total coating amount (Y2) in the latter stage part 22 is 112 g/L-cat and the total alumina content (X2) in the latter stage part 22 is 50 g/L-cat.

### (Example 2)

The exhaust gas purification catalyst (Example 2) was manufactured in a manner similar to Example 1 except that the wash-coating with the slurry 2 for the latter stage lower layer formation was performed so that alumina was contained at 30 g/L-cat and the coating amount became 73 g/L-cat (coating amount was increased) and the wash-coating with the slurry 4 for the latter stage upper layer formation was performed so that the coating amount became 62 g/L-cat (coating amount was increased). In Example 2, the total coating amount (Y2) in the latter stage part 22 is 135 g/L-cat and the total alumina content (X2) in the latter stage part 22 is 55 g/L-cat.

### (Example 3)

The exhaust gas purification catalyst (Example 3) was manufactured in a manner similar to Comparative Example 1 except that the wash-coating with the slurry 2 for the latter stage lower layer formation was performed so that the coating amount became 73 g/L-cat (coating amount was increased). In Example 3, the total coating amount (Y2) in the latter stage part 22 is 125 g/L-cat.

### (Example 4)

The exhaust gas purification catalyst (Example 4) was manufactured in a manner similar to Comparative Example 1 except that the wash-coating with the slurry 1 for the former stage lower layer formation was performed so that alumina was contained at 18 g/L-cat and the coating amount became 40 g/L-cat (coating amount was decreased), the wash-coating with the slurry 3 for the former stage upper layer formation was performed so that alumina was contained at 21 g/L-cat and the coating amount became 44 g/L-cat (coating amount was decreased), the wash-coating with the slurry 2 for the latter stage lower layer formation was performed so that alumina was contained at 24 g/L-cat and the coating amount became 68 g/L-cat (coating amount was increased), and the wash-coating with the slurry 4 for the latter stage upper layer formation was performed so that alumina was contained at 32 g/L-cat and the coating amount became 57 g/L-cat (coating amount was increased). In Example 4, the total coating amount (Y1) in the former stage part 21 is 84 g/L-cat and the total alumina content (X1) in the former stage part 21 is 39 g/L-cat. In addition, the total coating amount (Y2) in the latter stage part 22 is 125 g/L-cat and the total alumina content (X2) in the latter stage part 22 is 56 g/L-cat.

### (Example 5)

The exhaust gas purification catalyst (Example 5) was manufactured in a manner similar to Comparative Example 1 except that the wash-coating with the slurry 1 for the former stage lower layer formation was performed so that alumina was contained at 15 g/L-cat and the coating amount became 35 g/L-cat (coating amount was decreased), the wash-coating with the slurry 3 for the former stage upper layer formation was performed so that alumina was contained at 19 g/L-cat and the coating amount became 39 g/L-cat (coating amount was decreased), the wash-coating with the slurry 2 for the latter stage lower layer formation was performed so that alumina was contained at 29 g/L-cat and the coating amount became 73 g/L-cat (coating amount was increased), and the wash-coating with the slurry 4 for the latter stage upper layer formation was performed so that alumina was contained at 35 g/L-cat and the coating amount became 62 g/L-cat (coating amount was increased). In Example 5, the total coating amount (Y1) in the former stage part 21 is 74 g/L-cat and the total alumina content (X1) in the former stage part 21 is 34 g/L-cat. In addition, the total coating amount (Y2) in the latter stage part 22 is 135 g/L-cat and the total alumina content (X2) in the latter stage part 22 is 64 g/L-cat.

The exhaust gas purification catalyst according to each example was manufactured in the aforementioned manner. Table 1 collectively shows the coating amount Y1 in the former stage part 21, the alumina content X1 in the former stage part 21, the coating amount Y2 in the latter stage part 22, and the alumina content X2 in the latter stage part 22. It should be noted that the coating amount Y1 in the former stage part 21 was obtained based on the total of the slurry 1 for the former stage lower layer formation and the slurry 3 for the former stage upper layer formation, and the coating amount Y2 in the latter stage part 22 was obtained based on the total of the slurry 2 for the latter stage lower layer formation and the slurry 4 for the latter stage upper layer formation. The alumina content X1 in the former stage part 21 and the alumina content X2 in the latter stage part 22 were obtained similarly. Then, the exhaust gas purification catalyst in each example manufactured as above was evaluated as below.

**Table 1**

| | Former stage part 21 | | | | | | Latter stage part 22 | | | | | | Y2/Y1 | X2/X1 | Warming performance | Heat retaining performance |
|---|---|---|---|---|---|---|---|---|---|---|---|---|---|---|---|---|
| | Former stage lower layer 21B (Slurry 1) | | Former stage upper layer 21A (Slurry 3) | | Coating amount Y1 | Alumina content X1 | Latter stage lower layer 22D (slurry 2) | | Latter stage upper layer 22C (Slurry 4) | | Coating Amount Y2 | Alumina content X2 | | | | |
| | Coating amount g/L-cat | Alumina content g/L-cat | Coating amount g/L-cat | Alumina content g/L-cat | | | Coating amount g/L-cat | Alumina content g/L-cat | Coating amount g/L-cat | Alumina content g/L-cat | | | | | NOx-WU | NOx-T50 at temperature decrease |
| Comparative Example 1 | 50 | 25 | 52 | 25 | 102 | 50 | 50 | 25 | 52 | 25 | 102 | 50 | 1.0 | 1.0 | 27.6 | 373 |
| Example 1 | 50 | 20 | 52 | 25 | 102 | 45 | 60 | 25 | 52 | 25 | 112 | 50 | 1.1 | 1.1 | 26.9 | 360 |
| Example 2 | 50 | 20 | 52 | 25 | 102 | 45 | 73 | 30 | 62 | 25 | 135 | 55 | 1.3 | 1.2 | 26.9 | 358 |
| Example 3 | 50 | 25 | 52 | 25 | 102 | 50 | 73 | 25 | 52 | 25 | 125 | 50 | 1.2 | 1.0 | 25.1 | 355 |
| Example 4 | 40 | 18 | 44 | 21 | 84 | 39 | 68 | 24 | 57 | 32 | 125 | 56 | 1.5 | 1.4 | 25.1 | 355 |
| Example 5 | 35 | 15 | 39 | 19 | 74 | 34 | 73 | 29 | 62 | 35 | 135 | 64 | 1.8 | 1.9 | 27.0 | 360 |

### <Durability test>

The exhaust gas purification catalyst according to each example was attached to an exhaust system of a gasoline engine with a displacement of 4.6 L. The engine was operated at an average engine speed of 3500 rpm, and the durability test was performed for 50 hours under a condition of an inlet gas temperature of 1000°C.

### <Evaluation test on warming performance - warm-up (WU) performance>

After the durability test ended, the exhaust gas purification catalyst according to each example was attached to an exhaust system of a gasoline engine with a displacement of 2.5 L. Then, with the inlet gas temperature of the gas entering the exhaust gas purification catalyst kept at 500°C, the time it took for a NOx purifying ratio to become 50% (warm-up time, NOx-WU) was measured. The results are shown in Table 1 and Fig. 4. Fig. 4 shows the relation between the warm-up time and the ratio (Y2/Y1) of the coating amount Y2 in the latter stage part 22 to the coating amount Y1 in the former stage part 21. It should be noted that regarding the warm-up time, the smaller value (lower side in Fig. 4) indicates the superior warming performance.

As shown in Table 1 and Fig. 4, Examples 1 to 5 in which the aluminum content ratio (X2/X1) satisfied 1.0 ≤ (X2/X1) and the coating amount ratio (Y2/Y1) satisfied 1.0 < (Y2/Y1) ≤ 2.0 were superior to Comparative Example 1 in the warming performance. It is considered that this is because satisfying 1.0 < (Y2/Y1), in other words, making the coating amount in the former stage part 21 smaller than the coating amount in the latter stage part 22 increases the precious metal density in the former stage part 21 and accordingly, the catalyst becomes warm easily. Although the detailed mechanism is unclear, the comparison between Comparative Example 1 and Example 3 may indicate that the properties of the latter stage part 22 (for example, coating amount) also have some influence on the warming performance.

### <Evaluation test on high load performance>

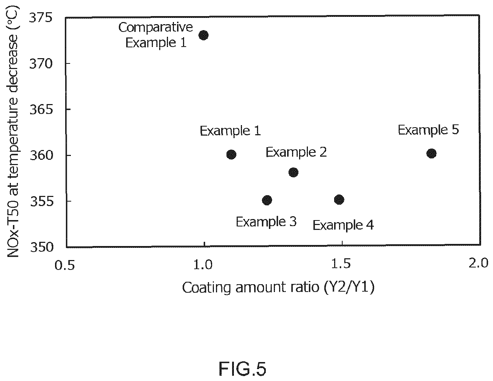

After the durability test ended, the exhaust gas purification catalyst according to each example was attached to an exhaust system of a gasoline engine with a displacement of 2.5 L. Then, the high load performance was evaluated using a catalyst evaluation apparatus. Specifically, the exhaust gas purification catalyst according to each example was set in the catalyst evaluation apparatus, the inlet gas temperature was decreased from 500°C to room temperature (25°C) while simulated exhaust gas with a theoretical air-fuel ratio (A/F) of 14.6 was supplied at an average engine speed of 2600 rpm, and thus, the NOx purifying ratio at the temperature decrease was measured. On the basis of the NOx concentration ratio between the inflow gas and the outflow gas, the NOx purifying ratio was measured. Then, the temperature at which the NOx purifying ratio became 50% (NOx-T50) was determined. The results are shown in Table 1 and Fig. 5. Fig. 5 shows the relation between the ratio (Y2/Y1) of the coating amount Y2 in the latter stage part 22 to the coating amount Y1 in the former stage part 21 and NOx-T50 at the temperature decrease.

As shown in Table 1 and Fig. 5, Examples 1 to 5 in which the aluminum content ratio (X2/X1) satisfied 1.0 ≤ (X2/X1) and the coating amount ratio (Y2/Y1) satisfied 1.0 < (Y2/Y1) ≤ 2.0 were superior to Comparative Example 1 in the high load performance. It is considered that this is because: (1) by satisfying 1.0 ≤ (X2/X1), the heat capacity of the latter stage part 22 is increased and the heat retaining property of the latter stage part 22 is increased; (2) by satisfying 1.0 < (Y2/Y1), the precious metal density of the former stage part 21 is increased and the catalyst reactivity in the former stage part 21 is improved; and (3) by satisfying (Y2/Y1) ≤ 2.0, the sintering of the precious metal is suppressed.

In particular, by satisfying one, or preferably two or more of the following conditions, the warming performance and the high load performance can be made balanced at the higher level:
(1) 1.1 ≤ (Y2/Y1) ≤ 1.8, particularly 1.2 ≤ (Y2/Y1) ≤ 1.5;
(2) 70 g/L ≤ Y1 ≤ 105 g/L;
(3) 110 g/L ≤ Y2 ≤ 135 g/L;
(4) 1.0 < (X2/X1) ≤ 2.0;
(5) X1 < 50 g/L, particularly 34 g/L-cat ≤ X1 ≤ 45 g/L-cat; and
(6) X2 <_ 65 g/L, particularly 50 g/L-cat ≤ X2 ≤ 65 g/L-cat.

Although specific examples of the present invention have been described in detail above, they are merely examples and do not limit the scope of the claims. The techniques described in the scope of claims include those in which the specific examples exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

## Claims

1. An exhaust gas purification catalyst that is disposed in an exhaust path of an internal-combustion engine and purifies exhaust gas emitted from the internal-combustion engine, the exhaust gas purification catalyst comprising a base material, and a catalyst coated layer formed on the base material and containing a precious metal catalyst and alumina, wherein
the catalyst coated layer includes a former stage part existing on an upstream side and a latter stage part existing on a downstream side relative to the former stage part, in a flowing direction of the exhaust gas,
an alumina content X1 (g/L) in the former stage part per volume of the base material is not more than an alumina content X2 (g/L) in the latter stage part per volume of the base material, and
a ratio (Y2/Y1) of a coating amount Y2 (g/L) in the latter stage part per volume of the base material to a coating amount Y1 (g/L) in the former stage part per volume of the base material satisfies 1.0 < (Y2/Y1) ≤ 2.0.

2. The exhaust gas purification catalyst according to claim 1, wherein
a ratio (X2/X1) of the alumina content X2 to the alumina content X1 satisfies 1.0 ≤ (X2/X1) ≤ 2.0.

3. The exhaust gas purification catalyst according to claim 1 or 2, wherein the alumina content X1 is 20 g/L or more and 50 g/L or less.

4. The exhaust gas purification catalyst according to any one of claims 1 to 3, wherein the coating amount Y2 is 100 g/L or more and 160 g/L or less.

5. The exhaust gas purification catalyst according to any one of claims 1 to 4, wherein
the former stage part includes a former stage lower layer formed on a surface of the base material and a former stage upper layer formed on the former stage lower layer, and
the former stage upper layer contains rhodium.

6. The exhaust gas purification catalyst according to claim 5, wherein the alumina content in the former stage upper layer is 5 g/L or more and 25 g/L or less.

7. The exhaust gas purification catalyst according to claim 5 or 6, wherein
the latter stage part includes a latter stage lower layer formed on the surface of the base material and a latter stage upper layer formed on the latter stage lower layer,
the former stage upper layer and the latter stage upper layer contain rhodium, and
the former stage lower layer and the latter stage lower layer contain palladium.
